(19) Europäisches Patentamt
European Patent Office
Office européen des brevets

(11) **EP 0 984 382 B1**

(12) **EUROPÄISCHE PATENTSCHRIFT**

(45) Veröffentlichungstag und Bekanntmachung des Hinweises auf die Patenterteilung:
**15.09.2004 Patentblatt 2004/38**

(51) Int Cl.⁷: **G06K 7/10**

(21) Anmeldenummer: **99112111.2**

(22) Anmeldetag: **23.06.1999**

(54) **Verfahren zum Betreiben eines Strichcodelesers**

Method of using a bar code reader

Methode d'utilisation d'un lecteur de code à barres

(84) Benannte Vertragsstaaten:
**DE DK FR GB NL**

(30) Priorität: **04.09.1998 DE 19840455**

(43) Veröffentlichungstag der Anmeldung:
**08.03.2000 Patentblatt 2000/10**

(73) Patentinhaber: **Sick AG**
**79183 Waldkirch, Breisgau (DE)**

(72) Erfinder: **Reichenbach,Jürgen**
**79312 Emmendingen (DE)**

(74) Vertreter: **Manitz, Finsterwald & Partner GbR**
**Postfach 31 02 20**
**80102 München (DE)**

(56) Entgegenhaltungen:
**DD-A- 274 919          US-A- 5 017 013**

## Beschreibung

Die vorliegende Erfindung betrifft ein Verfahren zum Betreiben eines Strichcodelesers, der zum Abtasten und Erfassen von Strichcodes ausgebildet ist.

Derartige Strichcodeleser werden beispielsweise zur Sortierung von den Strichcode tragenden Gegenständen verwendet, wobei aufgrund einer Zuordnung eines jeweils erfaßten Strichcodes zu einem der Gegenstände eine Sortierung der Gegenstände erfolgen kann. Beispielsweise kann bei einer Gepäckstück-Förderanlage eines Flughafens jedes Gepäckstück mit einem Strichcode versehen sein, der den Zielflughafen kennzeichnet. Durch Erfassen des jeweils in dem Strichcode abgespeicherten Zielflughafens und der Zuordnung des entsprechenden Strichcodes zu dem jeweiligen Gepäckstück kann in der Transportvorrichtung automatisch eine Sortierung in unterschiedliche Abfertigungsstellen vorgenommen werden.

Die korrekte Zuordnung zwischen einem erfaßten Strichcode und dem diesen Strichcode tragenden Objekt wird dabei üblicherweise folgendermaßen durchgeführt:

Zunächst wird beim Eintreten des Objektes in ein sogenanntes Lesefeld über eine Lichtschranke ein Startsignal für einen Inkrementalgeber erzeugt, der Inkrementalsignale korrespondierend zu der Transportgeschwindigkeit des Objektes liefert. Auf diese Weise kann aus dem Inkrementalsignal zu jedem Zeitpunkt die Position des Objektes in Transportrichtung bezüglich eines beispielsweise durch den Beginn des Lesefeldes gebildeten Bezugspunktes bestimmt werden.

Wird nun von dem Strichcodeleser ein Strichcode innerhalb des Abtastbereiches erfaßt, so wird die Position des Strichcodes zum Zeitpunkt seiner Erfassung bestimmt und überprüft, welches Objekt sich zum Erfassungszeitpunkt an dieser Position befand.

Der Strichcode wird dann dem Objekt zugeordnet, das bei dieser Überprüfung ermittelt wird.

Sind die Objekte ausschließlich in Transportrichtung hintereinander angeordnet, so genügt es, die Position in Transportrichtung für eine korrekte Zuordnung zu bestimmen und auszuwerten. Können Objekte auch nebeneinander angeordnet sein, so ist auch eine entsprechende Auswertung einer Ortskomponente senkrecht zur Transportrichtung erforderlich. Die Bestimmung der Objektpositionen kann dabei auch durch andere Mittel als durch den beschriebenen Inkrementalgeber erfolgen, insbesondere kann bei konstanter Fördergeschwindigkeit das Weginkrementalsignal durch einen Timerinterrupt konstanter Frequenz ersetzt werden.

Bei der Bestimmung der Position des erfaßten Strichcodes sind dabei mehrere Parameter zu berücksichtigen. Zum einen wird der Abtastabstand zwischen dem Strichcodeleser und dem erfaßten Strichcode zum Zeitpunkt der Abtastung ermittelt, was beispielsweise durch eine Laufzeitmessung erfolgen kann. Aus diesem Abtastabstand sowie der Position und der Abtastwinkel des Strichcodelesers kann dann die Position des erfaßten Strichcodes ermittelt werden.

Die Abtastwinkel geben dabei die Verkippung des Strichcodelesers bezüglich eines karthesischen Koordinatensystems an, das vorteilhaft so ausgerichtet ist, daß die x-Achse in Transportrichtung des Objektes, die y-Achse senkrecht zur Transportrichtung in der Transportebene, die üblicherweise horizontal ausgerichtet ist, und die z-Achse senkrecht zur Transportebene, d. h. üblicherweise vertikal ausgerichtet, verlaufen. Der Abtastwinkel $\alpha$ gibt dann den Drehwinkel des Strichcodelesers bezüglich der x-Richtung an, d. h. $\alpha = 0$, wenn die Abtastlinie in x-Richtung verläuft. Der Abtastwinkel $\beta$, auch Skewwinkel genannt, definiert die Verkippung des Strichcodelesers in x-Richtung, d. h. $\beta = 0$, wenn der Strichcodeleser senkrecht von oben parallel zur z-Achse die Objekte abtastet. Der Abtastwinkel $\gamma$ definiert eine seitliche Verkippung der Strichcodelesers um die x-Achse, d. h. $\gamma = 0$ bei einer Abtastung der Objekte senkrecht von oben.

Die Positionen des Strichcodeleser sowie der erfaßten Strichcodes wird vorteilhaft durch Koordinaten des angegebenen karthesischen Koordinatensystems, d. h. durch eine x-, eine y- und eine z-Koordinate angegeben.

Problematisch bei der Zuordnung von erfaßten Strichcodes zu den jeweiligen Objekten ist es, daß die Position des Strichcodelesers im Raum relativ kompliziert zu bestimmen ist. Diese Position wird üblicherweise während der Installation einer entsprechenden Strichcodeleseanlage bestimmt, wodurch der Aufwand für die Installationsarbeiten deutlich erhöht wird.

Wird die Position der Strichcodelesers bei einem bereits installierten System nachträglich verändert, beispielsweise durch Umbauten oder sonstige äußere Einflüsse, muß die Position des Strichcodelesers neu bestimmt werden, was üblicherweise vom Betreiber der Strichcodeleseranlage selbst nicht durchgeführt werden kann. Daher muß in diesem Fall extra für die Neujustage des Systems bzw. die Bestimmung der Position des Strichcodelesers ein speziell ausgebildeter Wartungstechniker eingesetzt werden.

Neben der Position des Strichcodelesers müssen bei einer Neuinstallation bzw. bei einer Nachinstallation üblicherweise auch die Abtastwinkel neu bestimmt werden. Auch die Skalierung des Weginkrementgebers ist nicht in allen Fällen bekannt, so daß eventuell auch diese Skalierung bei der Installation einer entsprechende Anlage zunächst bestimmt werden muß.

Es ist eine Aufgabe der Erfindung, ein Verfahren zum Betreiben eines Strichcodelesers anzugeben, mit dem die Position eines Strichcodelesers in einfacher Weise und weitgehend automatisch ermittelt werden kann. Weiterhin soll es auch möglich sein, die Abtastwinkel und die Skalierung des Weginkrementgebers auf einfache Weise und möglichst automatisch zu bestimmen.

Diese Ausgabe wird erfindungsgemäß durch ein Verfahren zum Betreiben einer Strichcodelesers gelöst, bei dem ein oder mehrere Strichcodes an unterschiedlichen Positionen innerhalb eines Abtastbereichs des Strichcodelesers von diesem erfaßt werden, der Abtastabstand zwischen dem Strichcodeleser und dem jeweils erfaßten Strichcode ermittelt wird und aus dem jeweils ermittelten Abtastabstand und aus bekannten Positionsdaten der erfaßten Strichcodes die Position und/oder die Abtastwinkel des Strichcodelesers ermittelt werden.

Mit dem erfindungsgemäßen Verfahren können somit die Position und/oder die Abtastwinkel des Strichcodelesers ermittelt und in dem Strichcodeleser oder einer mit diesem verbundenen Auswerteschaltung abgespeichert werden. Die automatische Ermittlung der Position und/oder der Abtastwinkel des Strichcodelesers führt zu einer deutlich einfacheren Installation eines Strichcodeleserssystems, da die aufwendige manuelle Bestimmung der Position und/oder der Abtastwinkel des Strichcodelesers entfallen kann.

Die Position des Strichcodelesers wird dabei vorteilhaft als Koordinaten eines karthesischen Koordinatensystems bestimmt, wobei bei einer ausschließlichen hintereinanderliegenden Anordnung der Strichcodes in der durch die x-Richtung definierten Transportrichtung die Bestimmung der x-Koordinate grundsätzlich ausreichend für eine korrekte Zuordnung der Strichcodes zu dem jeweiligen Objekt ist.

Nachdem mit dem beschriebenen erfindungsgemäßen Einlernverfahren die Position und/oder die Abtastwinkel des Strichcodelesers ermittelt wurden, kann der Normalbetrieb, d. h. der Abtast- und Zuordnungsbetrieb des Strichcodelesers aufgenommen werden, wobei die in dem Einlernverfahren ermittelte Position und/oder die Abtastwinkel zur Bestimmung der korrekten Zuordnung verwendet werden.

Nach einer bevorzugten Ausführungsform der Erfindung werden die Position und/oder die Abtastwinkel des Strichcodelesers anhand der ermittelten Abtastabstände und anhand von bekannten Relativpositionen unterschiedlicher Strichcodes zueinander ermittelt. Beispielsweise können während des Einlernverfahrens Objekte mit mehreren Strichcodes in den Abtastbereich der Strichcodelesers eingebracht werden, wobei die geometrische Positionierung der Strichcodes zueinander bekannt ist. So kann das Objekt beispielsweise so in den Abtastbereich eingebracht werden, daß zwei auf dem Objekt vorgesehene Strichcodes dieselben y- und z-Koordinaten besitzen und ausschließlich unterschiedliche x-Koordinaten aufweisen, d. h. nur in Transportrichtung gegeneinander versetzt sind. Wenn der Abstand in x-Richtung zwischen den beiden Strichcodes, der die Relativposition der Strichcodes zueinander darstellt, bekannt ist, so kann nach Erfassen der beiden Strichcodes durch den Strichcodeleser und jeweils dabei ermitteltem Abtastabstand beispielsweise die x-Koordinate des Strichcodelesers ermittelt werden.

Grundsätzlich ist es möglich, daß die Objekte mit den Strichcode durch den Abtastbereich hindurch bewegt werden, so daß der jeweilige Strichcode während seiner Transportbewegung von dem Abtaststrahl des Strichcodeleser überstrichen wird. Es ist jedoch auch möglich, daß die Objekte mit den Strichcodes so stationär in den Abtastbereich eingebracht werden, daß die Strichcodes im stationären Zustand von dem Abtaststrahl überstrichen werden. In diesem Fall kann beispielsweise die absolute Position des jeweiligen Strichcodes unmittelbar bestimmt, beispielsweise gemessen werden.

Bei einer Bewegung der die Strichcodes tragenden Objekte durch den Abtastbereich hindurch wird vorteilhaft durch einen an die Bewegungsgeschwindigkeit gekoppelten Weginkrementalgeber ein für die von dem Strichcode zurückgelegte Strecke repräsentative Inkremenalsignal erzeugt, jeweils zum Zeitpunkt der Erfassung eines Strichcodes das aktuelle Inkremantalsignal erfaßt und aus den bekannten Positionsdaten der erfaßten Strichcodes und den erfaßten Inkrementalsignalen die Inkrementalgeberskalierung, d. h. die Anzahl der Inkremente pro Wegstrecke ermittelt.

Ist beispielsweise bekannt, daß zwei auf einem Objekt angeordnete Strichcodes in x-Richtung 20 cm von einander entfernt angeordnet sind, so kann die Differenz der beiden zum jeweiligen Abtastzeitpunkt der Strichcodes erfaßten Inkrementalgeberzählerstände gebildet werden und anschließend durch Bildung des Quotienten aus dieser Differenz und dem bekannten Abstand die Skalierung des Weginkrementalgeber, d. h. die Anzahl der Inkremente pro Wegstrecke ermittelt werden.

Mittels der Skalierung des Weginkrementalgebers kann dann beispielsweise auch für jeden der erfaßten Strichcodes aus dem zum jeweiligen Abtastzeitpunkt ermittelten Inkrementalsignal der zurückgelegte Weg seit Starten des Inkrementalgebers ermittelt werden, der jeweils die x-Koordinate des Strichcodes zum Abtastzeitpunkt darstellt.

Weitere vorteilhafte Ausführungsformen der Erfindung sind in den Unteransprüchen angegeben.

Die Erfindung wird nachfolgend anhand eines Ausführungsbeispiels unter Bezugnahme auf die Zeichnung näher beschrieben; in dieser zeigt

Figur 1    eine schematische perspektivische Darstellung eines Strichcodelesesystems,

Figur 2    eine Detailansicht aus Figur 1 und

Figur 3    eine schematische Seitenansicht nach Figur 2.

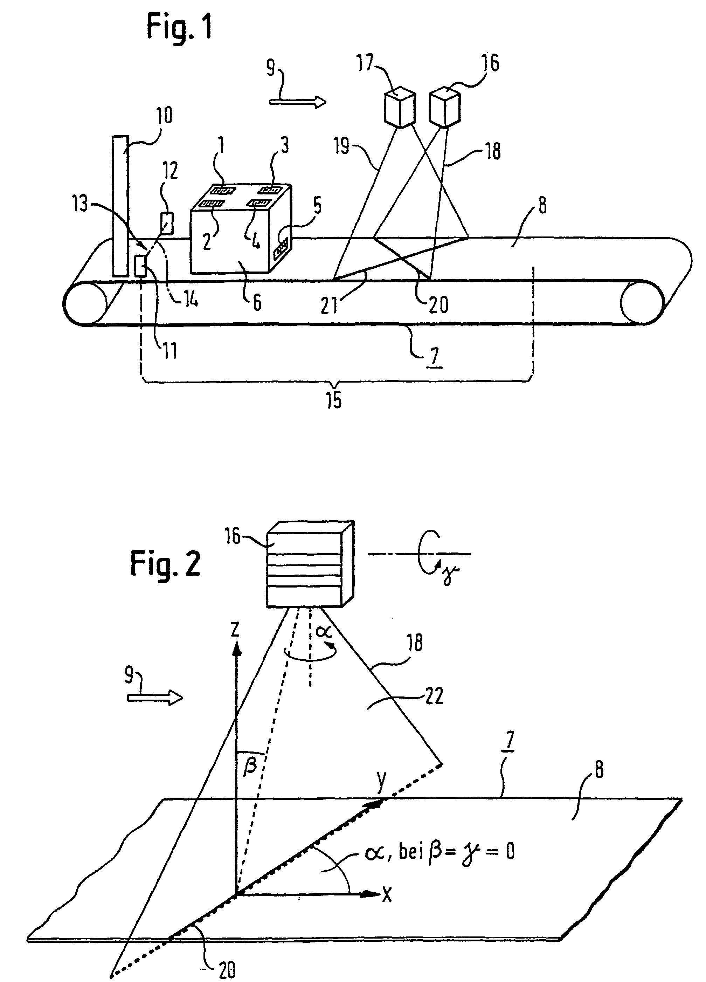

In Figur 1 ist ein mit Strichcodes 1, 2, 3, 4, 5 versehenes Objekt 6 auf einen Förderband 7 angeordnet, dessen Obertrum 8 entlang eines Pfeils 9 bewegbar ist.

Am Beginn des Förderbandes 7 ist eine optionale Höhenerfassungseinrichtung 10 sowie eine einen Sender 11 und einen Empfänger 12 umfassende Lichtschranke 13 angeordnet, wobei von dem Sender 11 ein Lichtstrahl 14 in Richtung des Empfängers 12 ausgesandt wird. Die Lichtschranke 13 definiert den Beginn eines Lesebereichs 15, innerhalb dessen über zwei oberhalb des Förderbandes 7 angeordnete Strichcodeleser 16, 17 das Objekt 6 mit den Strichcodes 1 - 5 abgetastet wird.

Dazu senden die Strichcodeleser 16, 17 jeweils einen beispielsweise über ein Polygonspiegelrad abgelenkten Abtaststrahl 18, 19 in Richtung des Förderbandes 7, so daß auf dem Förderband 7 Abtastlinien 20, 21 abgebildet werden.

Beim Bewegen des Objektes 6 in Richtung des Pfeils 9 werden die Strichcodes 1 - 5 jeweils zumindest teilweise oder ganz von den Abtastlinien 20, 21 überstrichen, so daß die in den Strichcodes 1 - 5 enthaltene Information decodiert und zur weiteren Auswertung einer nicht dargestellten Auswerteschaltung zugeführt wird. Dabei ist es möglich, daß nur teilweise überstrichene Strichcodes durch die Auswerteschaltung zu einem vollständigen Strichcode zusammengesetzt werden können und auf diese Weise der gesamte Strichcode decodiert werden kann.

Aus Figur 2 sind die unterschiedlichen Abtastwinkel $\alpha$, $\beta$ und $\gamma$ zu erkennen.

Der Winkel $\alpha$ gibt eine Drehung des Strichcodelesers 16 um die z-Achse an, wobei $\alpha = 0°$ ist, wenn die Abtastlinie 20 parallel zur x-Achse verläuft.

Der Winkel $\beta$ definiert die Verkippung der durch den periodisch verschwenkten Abtaststrahl 18 gebildeten, V-förmigen Abtastebene 22 um die y-Achse an, wobei bei der in Figur 2 dargestellten, sich ergebenden Abtastrichtung gegen die Pfeilrichtung 9 der Winkel $\beta$ negativ gewählt wird.

Der Winkel $\gamma$ gibt eine Verkippung des Strichcodelesers 16 um die x-Achse an, so daß ein Winkel $\gamma = 0$ eine Lesung senkrecht von oben auf das Förderband 7 und ein Winkel $\gamma \neq 0$ eine seitliche Lesung angibt.

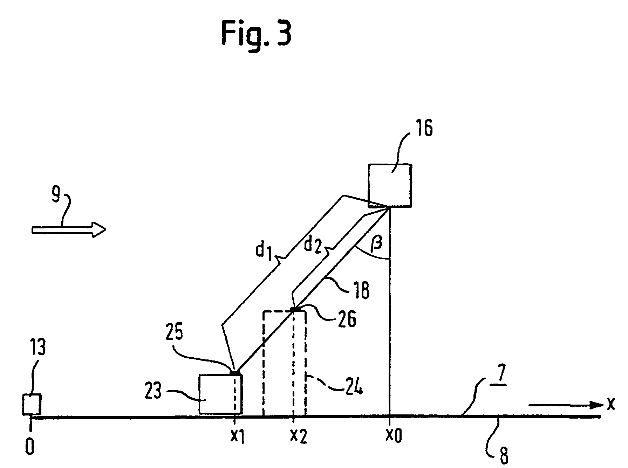

Aus der in Figur 3 dargestellten schematischen Seitenansicht sind jeweils Abtastabstände $d_1$ und $d_2$ zwischen der Optik des Strichcodelesers 16 und jeweils einem auf einem Objekt 23 bzw. 24 angeordneten Strichcode 25 bzw. 26 zu erkennen. Dabei ist die x-Koordinate des Strichcodes 25 bezüglich des durch die Lichtschranke 13 definierten Bezugspunktes mit $x_1$ und die x-Koordinate des Strichcodes 26 mit $x_2$ angegeben. Die x-Koordinate des Strichcodelesers 16 ist mit $x_0$ angegeben.

Die Bestimmung der Position eines Strichcodes während des normalen Abtastbetriebes kann bei $\gamma = 0$, d. h. bei einer Lesung von oben, beispielsweise durch folgende Gleichungen erfolgen:

$$x = x_0 + \sin(\text{scanw}) * d_0 * \cos(\beta_2) * \cos(\alpha) + d_0 * \sin(\beta_2) * |\sin(\alpha)|$$

$$y = y_0 + \sin(\text{scanw}) * d_0 * \cos(\beta_2) * \sin(\alpha) + d_0 * \sin(\beta_2) * |\cos(\alpha)|$$

$$z = z_0 - d_0 * \cos(\beta_2) * \cos(\text{scanw})$$

Für $\gamma \neq 0$ ergibt sich die Position des Barcodes mit dem Werten der oben angegebenen Gleichungen wie folgt:

$$x_\gamma = x$$

$$y_\gamma = \cos(\gamma) * y + \sin(\gamma) * (z_0 - z)$$

$$z_\gamma = z_0 + \sin(\gamma) * y + \cos(\gamma) * z$$

Um den für die Zuordnung des Strichcodes zu dem den Strichcode tragenden Objekt relevanten x-Positionswert ermitteln zu können, muß zusätzlich der dem Strichcode zuzuordnende Inkrementalgeberstand berücksichtigt werden.

Bei scanw handelt es sich um den Scanwinkel, der die Position des abgetasteten Strichcodes innerhalb der Abtastlinie 20 angibt. Dabei wird die Winkelhalbierende der V-förmigen Abtastebene 22 als scanw = 0 definiert.

Für den Winkel $\beta_2$ gilt $\beta_2 = \beta$ - (schwingw), wobei der Schwingwinkel schwingw eine optionale Verschwenkung der V-förmigen Abtastebene 22 angibt, durch die an Stelle einer Abtastebene eine dreidimensionale Abtastpyramide erzeugt wird.

Um die im Abtastbetrieb zur Bestimmung der jeweiligen Positionskoordinaten eines Strichcodes erforderlichen Abtastwinkel sowie die Koordinaten des Strichcodelesers ermitteln zu können, wird erfindungsgemäß ein Einlernvorgang durchgeführt. Dieser Einlernvorgang wird im folgenden anhand der Figur 3 näher beschrieben.

Es wird beispielsweise in einem ersten Verfahrensschritt das Objekt 23 auf dem Förderband 7 an der Lichtschranke 13 vorbeigeführt, wodurch ein Startsignal für einen Inkrementalgeber erzeugt wird. Durch die Bewegung des Förderbandes 7 wird das Objekt 23 in die in Figur 3 gezeigte Position bewegt, wo der auf der Oberseite des Objektes 23 angeordnete Strichcode 25 von dem Abtaststrahl 18 des Strichcodelesers 16 erfaßt wird.

Gleichzeitig mit der Erfassung wird der Abtastabstand $d_1$ durch eine Abstandsmessung ermittelt und in einer Auswerteschaltung abgespeichert. Es ist auch möglich, anstelle einer Abstandsmessung die über die optionale Höhenerfassungseinrichtung 10 ermittelte Höhe des Objektes 6 zu bestimmen und aus der bekannten Position des Strichcodes auf dem Objekt 6 den Abtastabstand zu ermitteln.

Sind die Abtastwinkel bekannt, so kann aus der oben angegebenen Gleichung die x-Koordinate $x_0$ des Strichcodelesers 16 berechnet werden.

Ist einer der Abtastwinkel $\alpha$, $\beta$ oder beide Abtastwinkel $\alpha$, $\beta$ nicht bekannt, so kann ein weiteres Objekt 24 mit einem Strichcode 26 bzw. mehrere zusätzliche Objekte in den Abtastbereich eingebracht werden, wobei jedes dieser Objekte entlang der Pfeilrichtung 9 transportiert wird, bis der jeweilige auf dem Objekt befindliche Strichcode von dem Strichcodeleser 16 erfaßt und dabei der Abtastabstand $d_i$ (i = 1,...,n) bestimmt wird.

Aus den ermittelten Abtastabständen sowie den Positionswerten $x_1$, $x_2$, ... können dann die Abtastwinkel $\alpha$, $\beta$ sowie die x-Koordinate des Strichcodelesers 16 aus den oben angegeben Gleichungen durch einen Mehrfachansatz der ersten Gleichung ermittelt werden.

In entsprechender Weise können auch die y- und z-Koordinaten $y_0$ und $z_0$ des Strichcodelesers 16 sowie die Abtastwinkel $\alpha$, $\beta$, $\gamma$ ermittelt werden.

Durch eine ausreichende Anzahl von Einlernvorgängen mit an unterschiedlichen Positionen innerhalb des Abtastbereichs angeordneten Strichcodes können grundsätzlich sowohl alle Raumkoordinaten des Strichcodelesers als auch alle Abtastwinkel und die Skalierung des Weginkrementgebers ermittelt werden.

In vielen Fällen sind jedoch einige dieser Werte aufgrund der bei der Herstellung des Systems durchgeführten Konfiguration bekannt. Insbesondere wenn eine Vielzahl von Strichcodelesern, durch die das Förderband in unterschiedlichen Winkel überstrichen wird, in einem einheitlichen Trägerrahmen befestigt sind, sind beispielsweise die Abtastwinkel entsprechend der eingestellten Konfiguration vorgegeben. Auch die Skalierung des Weginkrementgebers ist dem Anwender in der Regel bekannt, da dieser oft vom Anwender bereitgestellt wird.

Sind die Lichtschranken in einem gemeinsamen Rahmen angeordnet, so ist üblicherweise jeweils der Abstand einer Lichtschranke zur Außenkante des Rahmens durch die Justierung im Werkt bekannt, so daß lediglich für alle Lichtschranke gemeinsam der Abstand zwischen der den Beginn des Lesebereichs 15 definierenden Lichtschranke 13 und der Außenkante des Rahmens berechnet werden muß.

**Bezugszeichenliste**

| | |
|---|---|
| 1 | Strichcode |
| 2 | Strichcode |
| 3 | Strichcode |
| 4 | Strichcode |
| 5 | Strichcode |
| 6 | Objekt |
| 7 | Förderband |
| 8 | Obertrum |
| 9 | Pfeil |
| 10 | Höhenerfassungseinrichtung |
| 11 | Sender |
| 12 | Empfänger |
| 13 | Lichtschranke |
| 14 | Lichtstrahl |
| 15 | Lesebereich |
| 16 | Strichcodeleser |

17 Strichcodeleser
18 Abtaststrahl
19 Abtaststrahl
20 Abtastlinie
21 Abtastlinie
22 Abtastebene
23 Objekt
24 Objekt
25 Strichcode
26 Strichcode

**Patentansprüche**

1. Verfahren zum Betreiben eines Strichcodelesers (16), bei dem ein oder mehrere Strichcodes (25, 26) an unterschiedlichen Positionen ($x_1$, $x_2$) innerhalb eines Abtastbereichs des Strichcodelesers (16) von diesem erfaßt werden, der Abtastabstand ($d_1$, $d_2$) zwischen dem Strichcodeleser (16) und dem jeweils erfaßten Strichcode (25, 26) ermittelt wird und aus dem jeweils ermittelten Abtastabstand ($d_1$, $d_2$) und aus bekannten Positionsdaten ($x_1$, $x_2$) der erfaßten Strichcodes (25, 26) die Position ($x_0$, $y_0$, $z_0$) und/oder die Abtastwinkel ($\alpha$, $\beta$, $\gamma$) des Strichcodelesers (16) ermittelt werden.

2. Verfahren nach Anspruch 1,
**dadurch gekennzeichnet ,**
**daß** die Relativpositionen unterschiedlicher Strichcodes (1, 2, 3, 4) zueinander bekannt sind und anhand der Relativpositionen und der ermittelten Abtastabstände die Position ($x_0$, $y_0$, $z_0$) und/oder die Abtastwinkel ($\alpha$, $\beta$, $\gamma$) des Strichcodelesers (16) ermittelt werden.

3. Verfahren nach Anspruch 1 oder 2,
**dadurch gekennzeichnet ,**
**daß** die Strichcodes durch den Abtastbereich hindurch bewegt werden.

4. Verfahren nach Anspruch 3,
**dadurch gekennzeichnet,**
**daß** durch einen an die Bewegungsgeschwindigkeit der Strichcodes (1 - 5, 25, 26) gekoppelten Weginkrementalgeber ein für die von dem Strichcode (1 - 5, 25, 26) zurückgelegte Strecke repräsentatives Inkrementalsignal erzeugt wird, daß jeweils zum Zeitpunkt der Erfassung eines Strichcodes (1 - 5, 25, 26) das aktuelle Inkrementalsignal erfaßt wird und daß aus den bekannten Positionsdaten ($x_1$, $x_2$) der erfaßten Strichcodes (1 - 5, 25, 26) und den erfaßten Inkrementalsignalen die Inkrementalgeberskalierung, d. h. die Anzahl der Inkremente pro Wegstrecke, ermittelt wird.

5. Verfahren nach Anspruch 1 oder 2,
**dadurch gekennzeichnet,**
**daß** die Strichcodes (1 - 5, 25, 26) jeweils an vorgegebenen Positionen ($x_1$, $x_2$) innerhalb des Abtastbereichs stationär angeordnet werden.

6. Verfahren nach einem der vorhergehenden Ansprüche,
**dadurch gekennzeichnet ,**
**daß** die Positionsdaten ($x_1$, $x_2$) der Strichcodes (25, 26) und die ermittelte Position ($x_0$, $y_0$, $z_0$) des Strichcodelesers (16) auf einen gemeinsamen Bezugspunkt (0) bezogen werden.

**Claims**

1. Method of operating a bar code reader (16) in which one or more bar codes (25, 26) are detected at different positions ($x_1$, $x_2$) within a scanning range of the bar code reader (16) by the latter, the scanning distance ($d_1$, $d_2$) between the bar code reader (16) and the respectively detected bar code (25, 26) is found and the position ($x_0$, $y_0$, $z_0$) and/or the scanning angle ($\alpha$, $\beta$, $\gamma$) of the bar code reader (16) is/ are found from the respectively found scanning distance ($d_1$, $d_2$) and from known position data ($x_1$, $x_2$) of the detected bar code (25, 26).

**2.** Method in accordance with claim 1, **characterized in that** the relative positions of different bar codes (1, 2, 3, 4) to one another are known and the position $(x_0, y_0, z_0)$ and/or the scanning angle $(\alpha, \beta, \gamma)$ of the bar code reader (16) is/are found with reference to the relative positions and the scanning distances found.

**3.** Method in accordance with claim 1 or claim 2, **characterized in that** the bar codes are moved through the scanning region.

**4.** Method in accordance with claim 3, **characterized in that** an incremental signal representative for the path traversed by the bar code (1 - 5, 25, 26) is produced by an incremental path transducer coupled to the speed of movement of the bar code (1 - 5, 25, 26); **in that**, at the time of detection of a bar code (1 - 5, 25, 26), the actual incremental signal is respectively determined; and **in that** the incremental transducer scale, i.e. the number of increments per traversed path is found from the known position data $(x_1, x_2)$ of the detected bar codes (1 - 5, 25, 26) and from the incremental signals that are detected.

**5.** Method in accordance with claim 1 or claim 2, **characterized in that** the bar codes (1 - 5, 25, 26) are each arranged stationary at predetermined positions $(x_1, x_2)$ within the scanning range.

**6.** Method in accordance with any one of the preceding claims, **characterized in that** the position data $(x_1, x_2)$ of the bar codes (25, 26) and the position $(x_0, y_0, z_0)$ found for the bar code reader (16) are related to a common reference point (0).

**Revendications**

**1.** Procédé pour faire fonctionner un lecteur de code à barres (16), dans lequel on saisit un ou plusieurs codes à barres (25, 26) à des positions différentes $(x_1, x_2)$ à l'intérieur d'une zone de palpage du lecteur de code à barres (16) au moyen de ce dernier, on détermine la distance de palpage $(d_1, d_2)$ entre le lecteur de code à barres (16) et le code à barres respectif saisi (25, 26), et à partir de la distance de palpage respective déterminée $(d_1, d_2)$ et à partir des données connues des positions $(x_1, x_2)$ des codes à barres saisis (25, 26), on détermine la position $(x_0, y_0, z_0)$ et/ou les angles de palpage $(\alpha, \beta, \gamma)$ du lecteur de code à barres (16).

**2.** Procédé selon la revendication 1, **caractérisé en ce que** les positions relatives de différents codes à barres (1, 2, 3, 4) les uns par rapport aux autres sont connues, et en se rapportant aux positions relatives des distances de palpage déterminées, on détermine la position $(x_0, y_0, z_0)$ et/ou les angles de palpage $(\alpha, \beta, \gamma)$ du lecteur de code à barres (16).

**3.** Procédé selon l'une ou l'autre des revendications 1 et 2, **caractérisé en ce que** l'on déplace les codes à barres à travers la zone de palpage.

**4.** Procédé selon la revendication 3, **caractérisé en ce qu'**un capteur incrémentiel de course couplé à la vitesse de déplacement du code à barres (1 - 5, 25, 26) génère un signal incrémentiel représentatif du trajet parcouru par le code à barres (1 - 5, 25, 26), on saisit le signal incrémentiel actuel à l'instant respectif de la saisie d'un code à barres (1 - 5, 25, 26), et à partir des données connues des positions $(x_1, x_2)$ des codes à barres saisis (1 - 5, 25, 26) et à partir des signaux incrémentiels saisis, on détermine l'échelle du capteur incrémentiel, c'est-à-dire le nombre d'incréments par trajet.

**5.** Procédé selon l'une ou l'autre des revendications 1 et 2, **caractérisé en ce que** les codes à barres (1 - 5, 25, 26) sont agencés de façon stationnaire dans des positions données $(x_1, x_2)$ à l'intérieur de la zone de palpage.

**6.** Procédé selon l'une des revendications précédentes, **caractérisé en ce que** l'on met en relation avec un point de référence commun (0) les données $(x_1, x_2)$ des positions des codes à barres (25, 26) et la position déterminée $(x_0, y_0, z_0)$ du lecteur de code à barres (16).

EP 0 984 382 B1

Fig. 1

Fig. 2

$\alpha, bei\ \beta = \gamma = 0$

8

## Fig. 3